# EUROPÄISCHE PATENTANMELDUNG

(11) **EP 4 729 911 A1**
(43) Veröffentlichungstag der Anmeldung: **22.04.2026**
(21) Anmeldenummer: 25203241.2
(22) Anmeldetag: 19.09.2025
(51) Int. Cl.: G01L 9/00, G01L 19/06, G01L 19/14

(54) **PIEZORESISTIVER DRUCKSENSOR SOWIE VERFAHREN ZUR HERSTELLUNG EINES SOLCHEN PIEZORESISTIVEN DRUCKSENSORS**

(30) Priorität: 21.10.2024 EP 24207817
(71) Anmelder: Kistler Holding AG, 8408 Winterthur (CH)
(72) Erfinder: Rohner, Mathieu, 8004 Zürich (CH); Gramich, Joerg, 8308 Illnau (CH)

(57) **Zusammenfassung**

Die Erfindung betrifft einen piezoresistiven Drucksensor zur Messung des Druckes eines Mediums in einer Umgebung; mit mindestens einem Gehäuse, mindestens einem Grundkörper und mindestens einer Messeinheit; welches Gehäuse einen Innenraum und eine Öffnung aufweist; welcher Grundkörper und welche Messeinheit im Innenraum angeordnet sind; in welchem Grundkörper ein Sackloch und eine Membran ausgebildet sind, welche Membran das Sackloch einseitig begrenzt; welcher Grundkörper derart im Innenraum angeordnet ist, dass das Sackloch mit der Öffnung kommuniziert; welcher piezoresistive Drucksensor eingerichtet ist, wenn er dem Medium ausgesetzt ist, ein Eindringen des Mediums durch die Öffnung und das Sackloch bis zur Membran zu ermöglichen, welcher Druck des bis zur Membran eingedrungenen Mediums die Membran auslenkt; welche Messeinheit auf einer vom Sackloch abgewandten Seite der Membran angeordnet ist und für die Auslenkung der Membran eine Widerstandsänderung erzeugt, welche Widerstandsänderung proportional zum zu messenden Druck ist; wobei der piezoresistive Drucksensor mindestens eine stoffschlüssige Verbindung aufweist, welche stoffschlüssige Verbindung den Grundkörper direkt mit dem Gehäuse mechanisch fest verbindet; wobei die stoffschlüssige Verbindung eine Schmelztemperatur von grösser/gleich 250 °C aufweist; und wobei der piezoresistive Drucksensor mindestens eine elektrische Leitung aufweist, welche elektrische Leitung die Widerstandsänderung als elektrische Spannung abgreift und in die Umgebung ableitet.

## Beschreibung

### Technisches Gebiet

Die Erfindung betrifft einen piezoresistiven Drucksensor sowie ein Verfahren zur Herstellung eines solchen piezoresistiven Drucksensors nach den Oberbegriffen der unabhängigen Ansprüche.

### Stand der Technik

Ein Drucksensor dient der Messung des Druckes eines flüssigen oder gasförmigen Mediums. Die Druckmessung kann als Absolutdruckmessung mit einer Bezugnahme auf einen Bezugsdruck oder als Relativdruckmessung ohne eine solche Bezugnahme erfolgen. Die Druckmessung kann statisch über lange Zeiträume von mehreren Monaten erfolgen, beispielsweise bei der Messung des Druckes in einem Reifen eines Kraftfahrzeuges, sie kann aber auch dynamisch in Bruchteilen von Sekunden stattfinden, so wie bei Explosionen in einem Verbrennungsmotor eines Kraftfahrzeuges. In den letzten Jahrzehnten sind vielfältige Messprinzipien der Druckmessung entwickelt worden, weshalb zwischen piezoelektrischen, piezoresistiven, optischen, kapazitiven Drucksensoren, usw. unterschieden wird.

Die vorliegende Erfindung betrifft dann auch einen piezoresistiven Drucksensor, wie er aus der DE202009013919U1 bekannt ist. Der piezoresistive Drucksensor weist einen Grundkörper aus Silizium oder Glas auf, in welchem einseitig ein Sackloch eingebracht ist. Im Bereich des Sackloches bildet der Grundkörper eine Membran aus. Das durch das Sackloch zur Membran geleitete Medium beaufschlagt die Membran mit Druck und lenkt die Membran aus. Auf der vom Sackloch abgewandten Seite der Membran ist eine Messeinheit mit Widerstandselementen aus piezoresistivem Material angeordnet. Die Messeinheit erfasst die Auslenkung der Membran als Widerstandsänderung. Eine ebenfalls auf dem Grundkörper angeordnete Schaltungseinheit wandelt die Widerstandsänderung in ein Messsignal.

Durch die Anordnung der Messeinheit und der Schaltungseinheit auf der vom Sackloch abgewandten Seite der Membran sind die Messeinheit und die Schaltungseinheit dem Medium nicht direkt ausgesetzt, so dass sich der piezoresistive Drucksensor auch zur Messung des Druckes eines chemisch aggressiven Medium wie Kraftstoff für Verbrennungskraftmaschinen eignet, ohne dass der Kraftstoff dabei die Messeinheit und die Schaltungseinheit korrodieren kann, was die Verfügbarkeit des piezoresistiven Drucksensors in unerwünschter Weise beeinträchtigt.

Um die Messeinheit und die Schaltungseinheit vor schädlichen Umwelteinflüssen wie Feuchtigkeit, Staub, Berührung, usw. zu schützen, und auch um den piezoresistiven Drucksensor an einem Messort zu montieren, weist der piezoresistive Drucksensor ein Gehäuse auf. Das Gehäuse der DE202009013919U1 ist hohlzylinderförmig und aus Metall. Über einen Träger, der ebenfalls aus Metall ist, ist der Grundkörper mit der darauf angeordneten Messeinheit und Schaltungseinheit in einem Innenraum des Gehäuses befestigt. Dabei ist der Grundkörper über eine Glaslot- oder Klebeverbindung auf dem Träger befestigt und der Träger wiederum ist im Innenraum druckdicht mit dem Gehäuse verschweisst. Der Grundkörper ist derart im Innenraum angeordnet, dass das Medium nur über eine stirnseitige Öffnung am Gehäuse und durch ein Durchgangsloch im Träger bis zum Sackloch im Grundkörper gelangt. Über ein mantelseitiges Aussengewinde lässt sich der piezoresistive Drucksensor am Messort montieren.

Aufgabe der vorliegenden Erfindung ist es, den piezoresistiven Drucksensor der DE202009013919U1 zu verbessern. Auch stellt sich die Erfindung die Aufgabe, ein Verfahren zur Herstellung eines piezoresistiven Drucksensors aufzuzeigen, welches gegenüber dem des piezoresistiven Drucksensors der DE202009013919U1 verbessert ist.

Ein Verbesserungspotenzial besteht.

So weist die Schaltungseinheit der DE202009013919U1 einen integrierten Schaltkreis und elektronische Komponenten auf, welche oft nur für Dauerbetriebstemperaturen im Bereich von -55 °C bis 125 °C ausgelegt sind. Für Dauerbetriebstemperaturen des piezoresistiven Drucksensors von mehr als 200 °C sind daher Spezialkonstruktionen des integrierten Schaltkreises und der elektronischen Komponenten nötig. Solche Spezialkonstruktionen des integrierten Schaltkreises und der elektronischen Komponenten werden nur in kleinen Stückzahlen hergestellt, was deren Beschaffung aufwändig und teuer gestaltet.

Weiter sind der integrierte Schaltkreis und die Messeinheit der DE202009013919U1 auf einem Träger aus Silizium gefertigt. Silizium ist ein Halbleiter und weist bei Dauerbetriebstemperaturen des piezoresistiven Drucksensors von mehr als 200 °C grosse Leckströme auf, welche das Messsignal verfälschen und damit die Genauigkeit der Messung des Druckes stark beeinträchtigen können.

Auch sind die Schaltungseinheit und die Messeinheit auf der vom Sackloch abgewandten Seite der Membran der DE202009013919U1 zum Schutz des integrierten Schaltkreises, der elektronischen Komponenten und der elektrischen Verbindungen zur Messeinheit vor mechanischen Stössen und Vibrationen mit einer Vergussmasse ausgegossen. Die Vergussmasse ist üblicherweise aus Kunststoff wie Polyurethan, Epoxidharz, Silikon, usw. und beginnt sich bei Dauerbetriebstemperaturen des piezoresistiven Drucksensors von mehr als 200 °C zu zersetzen. Die fehlende Schutzmasse kann nicht mehr die Schutzwirkung vor mechanischen Stössen und Vibrationen erfüllen, was die Lebensdauer des piezoresistiven Drucksensors in unerwünschter Weise verkürzt. Die zersetzte Vergussmasse kann die Funktionsfähigkeit des piezoresistiven Drucksensors in unerwünschter Weise mindern.

Zudem weisen beim piezoresistiven Drucksensor der DE202009013919U1 der Grundkörper aus Silizium oder Glas, die Glaslotverbindung und der Träger aus Metall unterschiedliche thermische Ausdehnungskoeffizienten auf. Bei Dauerbetriebstemperaturen des piezoresistiven Drucksensors von mehr als 200 °C treten dadurch mechanische Spannungen auf, welche zu Rissen oder Bruch im Grundkörper oder in der Glaslotverbindung führen können, was die Ausfallwahrscheinlichkeit des piezoresistiven Drucksensors erhöht.

Schliesslich kann bei Dauerbetriebstemperaturen von mehr als 200 °C die Klebeverbindung der DE202009013919U1 beginnen zu Kriechen und gar brechen. Dies wiederum kann die Befestigung des Grundkörpers im Innenraum des Gehäuses beeinträchtigen und einen frühzeitigen Ausfall des piezoresistiven Drucksensors bewirken.

### Darstellung der Erfindung

Diese Aufgaben werden durch die Merkmale der unabhängigen Ansprüche gelöst.

Die Erfindung betrifft einen piezoresistiven Drucksensor zur Messung des Druckes eines Mediums in einer Umgebung; mit mindestens einem Gehäuse, mindestens einem Grundkörper und mindestens einer Messeinheit; welches Gehäuse einen Innenraum und eine Öffnung aufweist; welcher Grundkörper und welche Messeinheit im Innenraum angeordnet sind; in welchem Grundkörper ein Sackloch und eine Membran ausgebildet sind, welche Membran das Sackloch einseitig begrenzt; welcher Grundkörper derart im Innenraum angeordnet ist, dass das Sackloch mit der Öffnung kommuniziert; welcher piezoresistive Drucksensor eingerichtet ist, wenn er dem Medium ausgesetzt ist, ein Eindringen des Mediums durch die Öffnung und das Sackloch bis zur Membran zu ermöglichen, welcher Druck des bis zur Membran eingedrungenen Mediums die Membran auslenkt; welche Messeinheit auf einer vom Sackloch abgewandten Seite der Membran angeordnet ist und für die Auslenkung der Membran eine Widerstandsänderung erzeugt, welche Widerstandsänderung proportional zum zu messenden Druck ist; wobei der piezoresistive Drucksensor mindestens eine stoffschlüssige Verbindung aufweist, welche stoffschlüssige Verbindung den Grundkörper direkt mit dem Gehäuse mechanisch fest verbindet; und wobei die stoffschlüssige Verbindung eine Schmelztemperatur von grösser/gleich 250 °C aufweist.

Die Erfindung betrifft auch ein Verfahren zur Herstellung eines piezoresistiven Drucksensors zur Messung des Druckes eines Mediums in einer Umgebung; mit mindestens einem Gehäuse, mindestens einem Grundkörper und mindestens einer Messeinheit; welches Gehäuse einen Innenraum und eine Öffnung aufweist; welcher Grundkörper und welche Messeinheit im Innenraum angeordnet sind; in welchem Grundkörper ein Sackloch und eine Membran ausgebildet sind, welche Membran das Sackloch einseitig begrenzt; welcher Grundkörper derart im Innenraum angeordnet ist, dass das Sackloch mit der Öffnung kommuniziert; welcher piezoresistive Drucksensor eingerichtet ist, wenn er dem Medium ausgesetzt ist, ein Eindringen des Mediums durch die Öffnung und das Sackloch bis zur Membran zu ermöglichen, welcher Druck des bis zur Membran eingedrungenen Mediums die Membran auslenkt; welche Messeinheit auf einer vom Sackloch abgewandten Seite der Membran angeordnet ist und für die Auslenkung der Membran eine Widerstandsänderung erzeugt, welche Widerstandsänderung proportional zum zu messenden Druck ist; wobei in einem ersten Schritt des Verfahrens das Gehäuse und der Grundkörper bereitgestellt werden; und wobei in weiteren Schritten des Verfahrens der Grundkörper über mindestens eine stoffschlüssige Verbindung direkt mit dem Gehäuse mechanisch fest verbunden wird, welche stoffschlüssige Verbindung eine Schmelztemperatur von grösser/gleich 250 °C aufweist.

In einem ersten Unterschied zum piezoresistiven Drucksensor der DE202009013919U1 benötigt der erfindungsgemässe piezoresistive Drucksensor keinen Träger aus Metall. Vielmehr ist der Grundkörper direkt mit dem Gehäuse stoffschlüssig verbunden. Durch den Wegfall des Trägers aus Metall wird der Aufbau des piezoresistiven Drucksensors auf kostengünstige Weise vereinfacht und verbessert.

In einem weiteren Unterschied zum piezoresistiven Drucksensor der DE202009013919U1 wird für die mechanisch feste Verbindung des Grundkörpers mit dem Gehäuse erfindungsgemäss eine stoffschlüssige Verbindung mit einer Schmelztemperatur von grösser/gleich 250 °C bereitgestellt. Dadurch wird ein Kriechen oder ein Bruch der Glaslot- oder Klebeverbindung der DE202009013919U1 vermieden, was die Ausfallwahrscheinlichkeit des piezoresistiven Drucksensors senkt.

Vorteilhafte Weiterbildungen der Erfindung sind in den abhängigen Ansprüchen geschützt.

So weist der piezoresistive Drucksensor mindestens eine elektrische Leitung auf, welche elektrische Leitung die Widerstandsänderung als elektrische Spannung abgreift und in die Umgebung ableitet.

Entsprechend wird in einem weiteren Schritt des Verfahrens mindestens eine elektrische Leitung bereitgestellt; und wobei in einem weiteren Schritt des Verfahrens die elektrische Leitung mit der Messeinheit elektrisch verbunden wird, welche elektrische Leitung die Widerstandsänderung als elektrische Spannung abgreift und in die Umgebung ableitet.

In noch einem weiteren Unterschied zum piezoresistiven Drucksensor der DE202009013919U1 weist der erfindungsgemässe piezoresistive Drucksensor keine Schaltungseinheit im Gehäuse auf, welche die Widerstandänderung in ein Messsignal wandelt. Stattdessen wird die Widerstandsänderung über eine elektrische Leitung als elektrische Spannung in die Umgebung abgeleitet. Das Fehlen der Schaltungseinheit im Gehäuse vereinfacht den Aufbau des piezoresistiven Drucksensors. Und da der integrierte Schaltkreis und die elektronischen Komponenten der Schaltungseinheit oft nur für Dauerbetriebstemperaturen bis 125 °C ausgelegt sind und bei integrierten Schaltkreisen mit einem Träger aus Silizium grosse Leckströme auftreten, wird damit der Betriebsbereich des piezoresistiven Drucksensors verbessert, da nun Dauerbetriebstemperaturen von mehr als 200 °C möglich sind.

In einem zusätzlichen Unterschied zum piezoresistiven Drucksensor der DE202009013919U1 weist der erfindungsgemässe piezoresistiven Drucksensor keine Vergussmasse zum Schutz des integrierten Schaltkreises und der elektronischen Komponenten der Schaltungseinheit sowie zum Schutz der Messeinheit auf, welche Vergussmasse sich bei Dauerbetriebstemperaturen des piezoresistiven Drucksensors von mehr als 200 °C zersetzen und so die Schutzwirkung nicht mehr erfüllen kann, während die zersetzte Vergussmasse die Funktionsfähigkeit des piezoresistiven Drucksensors mindern kann.

### Kurze Beschreibung der Zeichnungen

Im Folgenden wird die Erfindung in beispielhaften Ausführungsformen unter Beizug von Figuren näher erläutert. Es zeigen
Fig. 1 ein Längsschnitt durch einen Teil einer ersten Ausführungsform eines piezoresistiven Drucksensors 10 mit einem einteiligen Gehäuse 1;
Fig. 2 ein Längsschnitt durch einen Teil einer zweiten Ausführungsform eines piezoresistiven Drucksensors 10 mit einem mehrteiligen Gehäuse 1;
Fig. 3 ein Querschnitt eines Teils des piezoresistiven Drucksensors 10 gemäss Fig. 1 oder 2 entlang eines Schnittverlaufes A - A;
Fig. 4 ein Fliessdiagramm mit Schritten MI bis MVI beim Verfahren zur Herstellung des piezoresistiven Drucksensors 10 gemäss Fig. 1 oder 2 in einer Variante unter Verwendung einer stoffschlüssigen Verbindung 4 in Ausführungsformen einer Lötverbindung; und
Fig. 5 ein Fliessdiagramm mit Schritten MI bis MVI beim Verfahren zur Herstellung des piezoresistiven Drucksensors 10 gemäss Fig. 1 oder 2 in einer Variante unter Verwendung einer stoffschlüssigen Verbindung 4 in der Ausführungsform eines Glaslotes.

Gleiche Bezugszeichen bezeichnen in den Figuren gleiche Gegenstände.

### Wege zur Ausführung der Erfindung

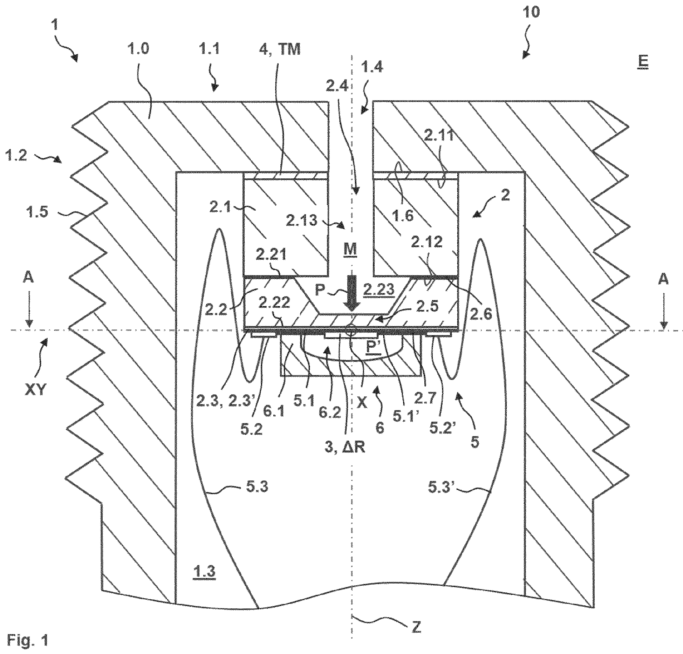

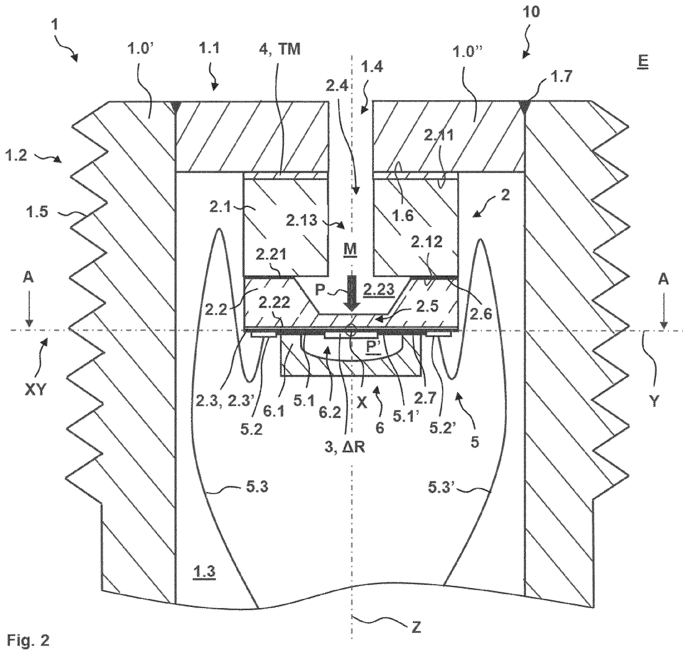

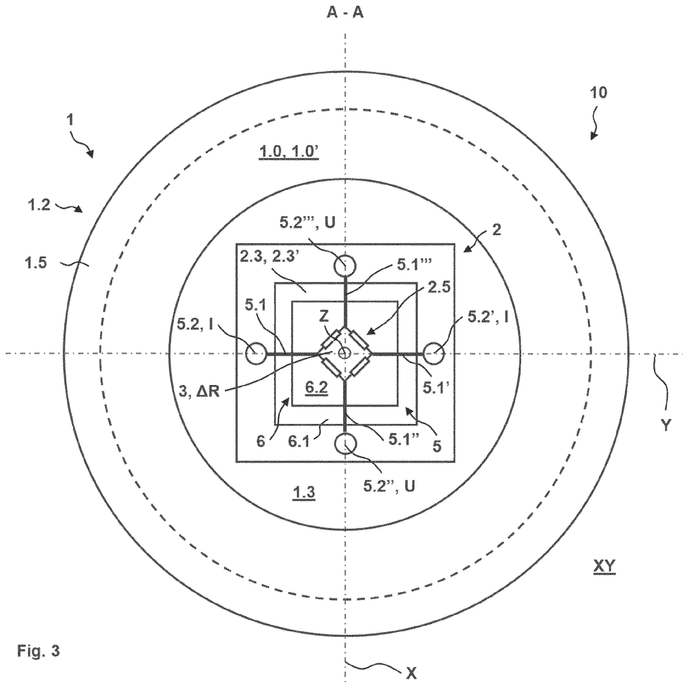

Die Fig. 1 und 2 zeigen einen Längsschnitt durch einen Teil des piezoresistiven Drucksensors 10 entlang einer Vertikalachse Z. Die Fig. 3 zeigt den piezoresistiven Drucksensor 10 entlang eines Schnittverlaufes A - A in einem Querschnitt einer von einer Horizontalachse X und einer Längsachse Y aufgespannten Horizontalebene XY. Die drei Achsen X, Y, Z stehen senkrecht aufeinander.

Der piezoresistive Drucksensors 10 ist für Dauerbetriebstemperaturen von bis zu 450 °C ausgelegt.

Der piezoresistive Drucksensor 10 weist mindestens ein Gehäuse 1, mindestens einen Grundkörper 2 und mindestens eine Messeinheit 3 auf.

### DAS GEHÄUSE 1

Das Gehäuse 1 hat einerseits die Funktion, die Messeinheit 3 vor schädlichen Umwelteinflüssen wie Feuchtigkeit, Staub, Berührung, usw. zu schützen. Das Gehäuse 1 hat andererseits die Funktion, eine Montage des piezoresistiven Drucksensor 10 an einem Messort zu bewerkstelligen.

Das Gehäuse 1 weist mindestens eine Stirnfläche 1.1, mindestens eine Mantelfläche 1.2 und einen Innenraum 1.3 auf. Die Stirnfläche 1.1 und die Mantelfläche 1.2 umgeben den Innenraum 1.3 vollständig. Die Stirnfläche 1.1 und die Mantelfläche 1.2 begrenzen das Gehäuse 1 gegenüber einer Umgebung E. Die Umgebung E befindet sich ausserhalb des Gehäuses 1. Das Gehäuse 1 trennt den Innenraum 1.3. von der Umgebung E. Die Messeinheit 3 ist im Innenraum 1.3 angeordnet. Schädliche Umwelteinflüsse aus der Umgebung E können durch das Gehäuse 1 nicht in den Innenraum 1.3 gelangen.

In der Umgebung E befindet sich ein Medium M. Das Medium M kann ein beliebiges flüssiges oder gasförmiges Medium sein. Das Medium M weist einen Druck P im Bereich von 1 bar bis 250 bar auf.

Auf der Stirnfläche 1.1 ist mindestens eine Öffnung 1.4 eingebracht, welche von der Umgebung E bis zum Innenraum 1.3 reicht. Die Funktion der Öffnung 1.4 ist es, das Medium M gezielt zur Messeinheit 3 zu leiten.

Gemäss Fig. 1 erstreckt sich die Öffnung 1.4 entlang der Vertikalachse Z. In einer Ebene senkrecht zur Vertikalachse Z weist die Öffnung 1.4 einen Durchmesser auf. Ein kleinster Durchmesser der Öffnung 1.4 ist kleiner/gleich 1000 µm, vorzugsweise kleiner/gleich 500 µm.

Auf der von der Stirnfläche 1.1 abgewandten Seite des Gehäuses 1 zum Innenraum 1.3 hin bildet das Gehäuse 1 im Bereich der Öffnung 1.4 eine Endfläche 1.6 aus. Gemäss Fig. 1 erstreckt sich die Endfläche 1.6 in einer Ebene senkrecht zur Vertikalachse Z um die Öffnung 1.4. Die Endfläche 1.6 umschliesst die Öffnung 1.4 vollständig.

Auf der Mantelfläche 1.2 ist mindestens ein Montagemittel 1.5 angebracht. Vorzugsweise ist das Montagemittel 1.5 ein Aussengewinde. Über das Aussengewinde ist der piezoresistive Drucksensor 10 an einem Messort der Umgebung E montierbar. Dazu weist der Messort ein zum Aussengewinde passendes Innengewinde auf. Der Messort und das Innengewinde sind figürlich nicht dargestellt.

Das Gehäuse 1 kann einteilig oder mehrteilig gefertigt sein. Dazu weist das Gehäuse 1 mindestens einen Gehäusekörper 1.0, 1.0', 1.0'' auf.

In der Ausführungsform gemäss Fig. 1 ist das Gehäuse 1 einteilig gefertigt und weist einen einzigen Gehäusekörper 1.0 auf. Vorzugsweise ist der Gehäusekörper 1.0 hohlzylinderförmig und umfasst die Stirnfläche 1.1 und die Mantelfläche 1.2.

In der Ausführungsform gemäss Fig. 2 ist das Gehäuse 1 mehrteilig gefertigt und weist einen ersten Gehäusekörper 1.0' und mindestens einen zweiten Gehäusekörper 1.0'' auf. Vorzugsweise ist der erste Gehäusekörper 1.0' hohlzylinderförmig und bildet die Mantelfläche 1.2 aus. Vorzugsweise ist der zweite Gehäusekörper 1.0'' scheibenförmig und bildet die Stirnfläche 1.1 aus. Der erste Gehäusekörper 1.0' und der zweite Gehäusekörper 1.0'' sind über eine stoffschlüssige Verbindung 1.7 miteinander verbunden. Vorzugsweise ist die stoffschlüssige Verbindung 1.7 eine ringförmige Schweissverbindung, welche sich über 360° über den gesamten Umfang der Stirnfläche 1.1 erstreckt. Die stoffschlüssige Verbindung 1.7 ist druckdicht, das heisst, dass das sich in der Umgebung E befindende Medium M auch bei einem Druck von bis zu 250 bar nicht durch die stoffschlüssige Verbindung 1.7 in den Innenraum 1.3 gelangen kann.

Der Gehäusekörper 1.0, 1.0', 1.0" ist aus einem mechanisch beständigem Material wie Metall, Keramik, usw. Vorzugsweise sind der Gehäusekörper 1.0 oder der zweite Gehäusekörper 1.0'' aus dem Werkstoff 1.3981 mit einem thermischen Ausdehnungskoeffizienten von kleiner/gleich 6.0 10⁻⁶ K⁻¹ im Bereich von 20 °C bis 450 °C. Vorzugsweise ist der erste Gehäusekörper 1.0' aus dem Werkstoff 1.4548 mit einem thermischen Ausdehnungskoeffizienten von kleiner/gleich 13.0 10⁻⁶ K⁻¹ im Bereich von 20 °C bis 450 °C. Vorzugsweise sind der Gehäusekörper 1.0 oder der zweite Gehäusekörper 1.0'' aus Aluminiumoxid (Al₂O₃), Zirkonsilikat, Aluminiumnitrid (AlN), Siliziumnitrid (Si₃N₄), usw. mit einem thermischen Ausdehnungskoeffizienten von kleiner/gleich 7.0 10⁻⁶ K⁻¹ im Bereich von 20 °C bis 450 °C. Bei Kenntnis der vorliegenden Erfindung kann der Fachmann für den Gehäusekörper 1.0 oder den zweiten Gehäusekörper 1.0'' auch ein anderes mechanisch beständiges Material mit einem thermischen Ausdehnungskoeffizienten von kleiner/gleich 7 10⁻⁶ K⁻¹ im Bereich von 20 °C bis 450 °C verwenden.

### DER GRUNDKÖRPER 2

Der Grundkörper 2 ist im Innenraum 1.3 angeordnet. Der Grundkörper 2 hat die Funktion, den zu messenden Druck P des Mediums M aufzunehmen.

Der Grundkörper 2 weist mindestens eines der folgenden elektrisch isolierenden Materialien: Silizium, Siliziumoxid, Borosilikatglas oder Siliziumkarbid auf.

Einkristall aus Silizium hat bei 20 °C einen spezifischen elektrischen Widerstand von grösser/gleich 10⁷ Ωm. Silizium hat bei 20 °C einen thermischen Ausdehnungskoeffizienten von 2.6 10⁻⁶ K⁻¹, welcher bei 450 °C auf 4.2 10⁻⁶ K⁻¹ ansteigt.

Siliziumoxid hat bei 20° C einen spezifischen elektrischen Widerstand von grösser/gleich 10¹² Ωm. Siliziumoxid hat im Bereich von 20 °C bis 450 °C einen thermischen Ausdehnungskoeffizienten von 4.5 10⁻⁷ K⁻¹ bis 6.5 10⁻⁷ K⁻¹.

Borosilikatglas hat bei 20° C einen spezifischen elektrischen Widerstand von grösser/gleich 10⁸ Ωm. Borosilikatglas hat im Bereich von 20 °C bis 450 °C einen thermischen Ausdehnungskoeffizienten von 3.3 10⁻⁶ K⁻¹ +/-0.3 10⁻⁶ K⁻¹.

Siliziumkarbid hat bei 20° C einen spezifischen elektrischen Widerstand von grösser/gleich 10⁶ Ωm. Siliziumkarbid hat im Bereich von 20 °C bis 450 °C einen thermischen Ausdehnungskoeffizienten von 4.5 10⁻⁶ K⁻¹.

Bei Kenntnis der vorliegenden Erfindung kann der Fachmann für den Grundkörper 2 auch ein anderes elektrisch isolierendes Material mit einem elektrischen Widerstand von grösser/gleich 10⁷ Ωm und einem thermischen Ausdehnungskoeffizienten von 4.5 10⁻⁷ K⁻¹ bis 4.5 10⁻⁶ K⁻¹ im Bereich von 20 °C bis 450 °C wie Siliziumnitrid, usw. verwenden.

Der Grundkörper 2 ist rechteckig. Der Grundkörper 2 weist bereichsweise ein Sackloch 2.4 und eine Membran 2.5 auf. Das Sackloch 2.4 ist auf einer von der Horizontalebene XY abgewandten Rückseite des Grundkörpers 2 angeordnet. Die Membran 2.5 ist auf einer der Horizontalebene XY zugewandten Vorderseite des Grundkörpers 2 angeordnet.

Vorzugsweise ist der Grundkörper 2 in Silicon-On-Insulator (SOI) Technologie aufgebaut und weist die folgenden funktionellen Schichten auf:
Eine Tragschicht 2.1 besteht aus einem der folgenden elektrisch isolierenden Materialien: Silizium, Borosilikatglas oder Siliziumkarbid. Die Tragschicht 2.1 weist entlang der Vertikalachse Z eine Dicke im Bereich 200 bis 1200 µm, vorzugsweise weist sie eine Dicke von 500 µm auf. Vorzugsweise ist die Tragschicht 2.1 aus Borosilikatglas oder aus Einkristall aus Silizium. Die Tragschicht 2.1 hat die Funktion die Messeinheit 3 zu tragen und die Messeinheit 3 mechanisch vom Gehäuse 1 zu entkoppeln. Die Tragschicht 2.1 ist rechteckig mit einer ersten Tragstirnfläche 2.11 und einer zweiten Tragstirnfläche 2.12. Die beiden Tragstirnflächen 2.11, 2.12 erstrecken sich senkrecht zur Vertikalachse Z. In der Tragschicht 2.1 ist das Sackloch 2.4 als Durchgangsloch 2.13 ausgebildet. Das Durchgangsloch 2.13 erstreckt sich entlang der Vertikalachse Z von der ersten Tragstirnfläche 2.11 zur zweiten Tragstirnfläche 2.12. Die Tragschicht 2.1 weist das Durchgangsloch 2.13 somit im Bereich der ersten Tragstirnfläche 2.11 auf. Und die Tragschicht 2.1 weist das Durchgangsloch 2.13 im Bereich der zweiten Tragstirnfläche 2.12 auf. Entlang der Vertikalachse Z kommuniziert die Öffnung 1.4 mit dem Durchgangsloch 2.13.

Eine Ausformschicht 2.2 besteht aus Silizium und weist entlang der Vertikalachse Z eine Dicke im Bereich von 40 µm bis 1000 µm, vorzugsweise weist sie eine Dicke im Bereich von 300 µm bis 400 µm auf. Die Ausformschicht 2.2 hat die Funktion, bereichsweise die Membran 2.5 zu bilden. Die Ausformschicht 2.2 ist rechteckig mit einer ersten Ausformstirnfläche 2.21 und einer zweiten Ausformstirnfläche 2.22. Die beiden Ausformstirnflächen 2.21, 2.22 erstrecken sich senkrecht zur Vertikalachse Z. In der Ausformschicht 2.2 ist das Sackloch 2.4 als wannenförmige Vertiefung 2.23 ausgebildet. Die wannenförmige Vertiefung 2.23 weist bezüglich der Vertikalachse Z schräge Wände auf. Der Bereich der Ausformschicht 2.2 entlang der Vertikalachse Z zwischen der wannenförmigen Vertiefung 2.23 und der zweiten Ausformstirnfläche 2.22 bildet die Membran 2.5. Die zweite Tragstirnfläche 2.12 und die erste Ausformstirnfläche 2.21 sind in einer Ebene senkrecht zur Vertikalachse Z in direkter Berührung. Vorzugsweise sind die Tragschicht 2.1 und die Ausformschicht 2.2 in dieser Berührungsebene über eine Verbindung 2.6 mechanisch fest miteinander verbunden. Die Verbindung 2.6 kann eine elektrochemische Verbindung wie anodisches Bonden, usw. oder eine chemische Verbindung wie direktes Bondes, usw. sein. Der Ausdruck "mechanisch fest" hat im Sinne der Erfindung die Bedeutung, dass die Verbindung über die gesamte Lebensdauer des piezoresistiven Drucksensors 10 von mindestens zehn Jahren funktionsgemäss beständig ist.

Eine Oxidschicht 2.3 besteht aus Siliziumoxid. Die Oxidschicht 2.3 hat die Funktion, die in der Horizontalebene XY angeordnete Messeinheit 3 gegenüber dem Grundkörper 2 elektrisch zu isolieren. Die Oxidschicht 2.3 ist auf der zweiten Ausformstirnfläche 2.22 angeordnet. Die Oxidschicht 2.3 weist entlang der Vertikalachse Z eine Dicke von kleiner/gleich 5 µm Dicke auf. Die Oxidschicht 2.3 hat bei 20° C einen spezifischen elektrischen Widerstand von grösser/gleich 10¹² Ωm. Die Oxidschicht 2.3 begrenzt den Grundkörper 2 in der Horizontalebene XY.

Die Tragschicht 2.1 ist über die stoffschlüssige Verbindung 4 mit dem Gehäuse 1 mechanisch fest verbunden. Für ein einteiliges Gehäuse 1 mit einem Gehäusekörper 1.0 oder für ein mehrteiliges Gehäuse 1 mit einem zweiten Gehäusekörper 1.0'' ist die Tragschicht 2.1 über die stoffschlüssige Verbindung 4 mit dem Gehäusekörper 1.0 oder dem zweiten Gehäusekörper 1.0'' mechanisch fest verbunden. Für den Gehäusekörper 1.0 oder den zweiten Gehäusekörper 1.0'' aus dem Werkstoff 1.3981 und für die Tragschicht 2.1 aus einem der folgenden elektrisch isolierenden Materialien: Silizium, Borosilikatglas oder Siliziumkarbid resultiert in der stoffschlüssigen Verbindung 4 im Bereich von 200 °C bis 450 °C eine Differenz der thermischen Ausdehnungskoeffizienten des Gehäusekörpers 1.0 oder des zweiten Gehäusekörpers 1.0'' und der Tragschicht 2.1 von kleiner/gleich 3.0 10⁻⁶ K⁻¹, vorzugsweise kleiner/gleich 2.0 10⁻⁶ K⁻¹. Diese Differenz der thermischen Ausdehnungskoeffizienten ist so gering, dass dadurch auch nur geringe mechanische Spannungen auftreten, welche in der Tragschicht 2.1 oder in der stoffschlüssigen Verbindung 4 zu Rissen oder Bruch führen können. Vorteilhafterweise wird durch diese geringe Differenz der thermischen Ausdehnungskoeffizienten auch der mechanische Spannungsübertrag auf die Messeinheit 3 reduziert.

Das Sackloch 2.4 erstreckt sich somit gemäss Fig. 1 entlang der Vertikalachse Z durch das Durchgangsloch 2.13 der Tragschicht 2.1 und die Vertiefung der Ausformschicht 2.2 und reicht bis zur Membran 2.5. In einer Ebene senkrecht zur Vertikalachse Z weist das Sackloch 2.4 einen Durchmesser auf. Der Durchmesser des Sackloches 2.4 ist kleiner/gleich 1000 µm, vorzugsweise ist der Durchmesser kleiner/gleich 500 µm.

Der Grundkörper 2 ist derart im Innenraum 1.3 angeordnet, dass das Sackloch 2.4 mit der Öffnung 1.4 kommuniziert und das Medium M aus der Umgebung E durch die Öffnung 1.4 in das Sackloch 2.4 und von dort bis zur Membran 2.5 gelangt. Vorzugsweise sind das Sackloch 2.4 und die Öffnung 1.4 entlang der Vertikalachse Z fluchtend zueinander angeordnet. Der zu messende Druck P liegt an der Membran 2.5 an. Der zu messende Druck P ist in Fig. 1 schematisch als schwarzer Pfeil dargestellt.

Die Membran 2.5 ist eingerichtet, den zu messenden Druck P aufzunehmen. Die Membran 2.5 weist eine erste Oberfläche und eine zweite Oberfläche auf. Die erste Oberfläche ist dem Sackloch 2.4 zugewandt und begrenzt das Sackloch 2.4 einseitig. Die zweite Oberfläche ist vom Sackloch 2.4 abgewandt und mit der Oxidschicht 2.3 bedeckt. Über die erste Oberfläche nimmt die Membran 2.5 den zu messenden Druck P auf. Unter der Wirkung des Druckes P ist die Membran 2.5 entlang der Vertikalachse Z auslenkbar.

Entlang der Vertikalachse Z weist die Membran 2.5 eine Dicke kleiner/gleich 400 µm, vorzugsweise kleiner/gleich 100 µm, vorzugsweise kleiner/gleich 40 µm auf. In der Horizontalebene XY weist die Membran 2.5 einen Durchmesser kleiner/gleich 1500 µm, vorzugsweise kleiner/gleich 1000 µm auf.

### DIE MESSEINHEIT 3

Die Messeinheit 3 hat die Funktion, für die Auslenkung der Membran 2.4 eine Widerstandsänderung ΔR zu erzeugen.

Die Messeinheit 3 ist in der Horizontalebene XY angeordnet. Vorzugsweise ist die Messeinheit 3 auf der Oxidschicht 2.3 der zweiten Oberfläche der Membran 2.5 angeordnet. Dadurch ist die Messeinheit 3 dem Medium M nicht direkt ausgesetzt. Deshalb kann das Medium M auch chemisch aggressiv, wie Kraftstoff für Verbrennungskraftmaschinen sein, welches die Messeinheit 3, falls sie dem Kraftstoff direkt ausgesetzt wäre, korrodieren und die Lebensdauer des piezoresistiven Drucksensors 10 in unerwünschter Weise verkürzen würde. Des Weiteren ist die Messeinheit 3 durch ihre Anordnung auf der Oxidschicht 2.3 gegenüber dem Grundkörper 2 elektrisch isoliert. Somit unterbindet die Oxidschicht 2.3 Leckströme der Messeinheit 3 zur Tragschicht 2.1 und ermöglicht einen Einsatz des piezoresistiven Drucksensors 10 bei Dauerbetriebstemperaturen von bis zu 450 °C.

Die Messeinheit 3 weist eine Mehrzahl von Widerstandselementen aus piezoresistivem Material wie Bordotiertes Silizium, usw. auf. Die Widerstandselemente sind auf die Oxidschicht 2.3 aufgebracht und durch die Oxidschicht 2.3 gegenseitig elektrisch isoliert. Die Widerstandselemente sind in Höhe, Länge und Breite strukturiert. Die Widerstandselemente sind durch Leitelemente zu einer Wheatstone'schen Brückenschaltung verbunden. Auch die Leitelemente sind auf die Oxidschicht 2.3 aufgebracht. Die Leitelemente sind aus elektrisch leitfähigem Material wie hochdotiertes Silizium, Aluminium, Titan, Wolfram, usw. Für die Verbindung zur Whe-atstone'schen Brückenschaltung sind die Leitelemente in Höhe, Länge und Breite strukturiert. Die Messeinheit 3 ist in Fig. 2 schematisch als Vollbrücke mit vier Widerstandselementen dargestellt. Das Aufbringen und Strukturieren der Widerstandselemente und der Leitelemente auf der Oxidschicht 2.3 erfolgt mittels chemischer Gasphasenabscheidung, physikalischer Gasphasenabscheidung, Epitaxie, Lithographie, Ätzen, usw. Vorzugsweise weist jedes Widerstandselement eine Höhe von kleiner/gleich 200 µm, eine Länge von kleiner/gleich 500 µm lang und eine Breite von kleiner/gleich 50 µm auf. Die Auslenkung der Membran 2.5 erzeugt eine Widerstandsänderung ΔR. Die Widerstandsänderung ΔR ist proportional zum zu messenden Druck P.

### DIE ELEKTRISCHE LEITUNG 5

Der piezoresistive Drucksensor 10 weist mindestens eine elektrische Leitung 5 auf. Die elektrische Leitung 5 hat die Funktion, einen elektrischen Strom I an die Messeinheit 3 anzulegen und eine elektrische Spannung U von der Messeinheit 3 abzugreifen und in die Umgebung E abzuleiten.

Die elektrische Leitung 5 weist mehrere Leiterbahnen 5.1, 5.1', 5.1'', 5.1''' und mehrere Kontaktstellen 5.2, 5.2', 5.2", 5.2‴ auf. Die Leiterbahnen 5.1, 5.1', 5.1", 5.1''' und die Kontaktstellen 5.2, 5.2', 5.2'', 5.2''' sind auf der Oxidschicht 2.3 angeordnet. Die Leiterbahnen 5.1, 5.1', 5.1", 5.1‴ und die Kontaktstellen 5.2, 5.2', 5.2'', 5.2‴ sind aus elektrisch leitfähigem Material wie hochdotiertes Silizium, Aluminium, Titan, Wolfram, Platin, Gold, usw. Vorzugsweise weisen die Leiterbahnen 5.1, 5.1', 5.1" , 5.1‴ entlang der Vertikalachse Z eine Höhe von kleiner/gleich 10 µm und in der Horizontalebene eine Breite von kleiner/gleich 100 µm auf. Vorzugsweise weisen die Kontaktstellen 5.2, 5.2', 5.2'', 5.2''' entlang der Vertikalachse Z eine Höhe von kleiner/gleich 10 µm und in der Horizontalebene XY eine Fläche von kleiner/gleich 1 mm² auf.

Vorzugsweise weist die elektrische Leitung 5 vier Leiterbahnen 5.1, 5.1', 5.1'', 5.1‴ und vier Kontaktstellen 5.2, 5.2', 5.2'', 5.2‴ auf. Jede der vier Leiterbahnen 5.1, 5.1', 5.1'', 5.1‴ weist ein erstes Ende und ein zweites Ende auf. Jede der vier Leiterbahnen 5.1, 5.1', 5.1'', 5.1‴ kontaktiert mit ihrem ersten Ende die Messeinheit 3. Jede der vier Leiterbahnen 5.1, 5.1', 5.1'', 5.1‴ kontaktiert mit ihrem ersten Ende einen anderen Ort zwischen zwei benachbarten Widerstandselementen der Messeinheit 3. Jede der vier Leiterbahnen 5.1, 5.1', 5.1'', 5.1‴ kontaktiert mit ihrem zweiten Ende eine Kontaktstelle 5.2, 5.2', 5.2", 5.2‴. Jede der vier Leiterbahnen 5.1, 5.1', 5.1'', 5.1‴ kontaktiert mit ihrem zweiten Ende eine andere der vier Kontaktstellen 5.2, 5.2', 5.2'', 5.2‴. Die Kontakte sind elektrische Kontakte.

Die vier Leiterbahnen 5.1, 5.1', 5.1'', 5.1‴ weisen zwei erste Leiterbahnen 5.1, 5.1' und zwei zweite Leiterbahnen 5.1'', 5.1‴ auf. Die vier Kontaktstellen 5.2, 5.2', 5.2'', 5.2''' weisen zwei erste Kontaktstellen 5.2, 5.2' und zwei zweite Kontaktstellen 5.2'', 5.2‴ auf. Die ersten Leiterbahnen 5.1, 5.1' und zweiten Leiterbahnen 5.1'', 5.1‴ kontaktieren die Messeinheit 3 alternierend. Über die zwei ersten Leiterbahnen 5.1, 5.1' und die zwei ersten Kontaktstellen 5.2, 5.2' wird ein elektrischer Strom I an die Messeinheit 3 angelegt. Vorzugsweise beträgt der elektrische Strom I konstant 1 mA. Gemäss dem Ohm'schen Gesetz resultiert aus einer Widerstandsänderung ΔR der Messeinheit 3 und dem angelegten elektrischem Strom I eine elektrische Spannung U. Über die zwei zweiten Leiterbahnen 5.1'', 5.1‴ und die zwei zweiten Kontaktstellen 5.2'', 5.2‴ wird die elektrische Spannung U abgegriffen.

Vorzugsweise ist auf der Messeinheit 3, den Leiterbahnen 5.1, 5.1', 5.1'', 5.1‴ und bereichsweise auch auf der Oxidschicht 2.3 mindestens eine Passivierungsschicht 2.3' aufgebracht. Die Passivierungsschicht 2.3' schützt die Messeinheit 3 und die Leiterbahnen 5.1, 5.1', 5.1'', 5.1‴ vor mechanischen Stössen, vor chemisch reaktiven Umgebungseinflüssen wie Sauerstoff, usw. und ist geeignet, mit der nachfolgend beschriebenen Abdeckung 6 eine mechanische Verbindung einzugehen. Die Passivierungsschicht 2.3' besteht vorzugsweise aus elektrisch isolierendem Material wie Siliziumoxid, Siliziumnitrid, usw. Die Passivierungsschicht 2.3' weist entlang der Vertikalachse Z eine Dicke von kleiner/gleich 5 µm Dicke auf. Das Aufbringen der Passivierungsschicht 2.3' auf der Messeinheit 3, den Leiterbahnen 5.1, 5.1', 5.1'', 5.1‴ und der Oxidschicht 2.3 erfolgt ebenfalls mittels chemischer Gasphasenabscheidung, physikalischer Gasphasenabscheidung, usw.

Die elektrische Leitung 5 weist mehrere Leiterdrähte 5.3, 5.3', 5.3, 5.3‴ auf. Die Leiterdrähte 5.3, 5.3', 5.3", 5.3‴ sind aus elektrisch leitfähigem Material wie Aluminium, Gold, usw. Die Leiterdrähte 5.3, 5.3', 5.3", 5.3‴ weisen Durchmesser im Bereich von 15 bis 200 µm Durchmesser auf.

Die Leiterdrähte 5.3, 5.3', 5.3'', 5.3‴ sind mittels Thermosonic-Ball-Wedge-Bonding, Ultraschall-Wedge-Wedge-Bonding, usw. mit den Kontaktstellen 5.2, 5.2', 5.2", 5.2‴ kontaktiert.

Vorzugsweise weist die elektrische Leitung 5 vier Leiterdrähte 5.3, 5.3', 5.3", 5.13" auf. Die vier Leiterdrähte 5.3, 5.3', 5.3", 5.13'' weisen zwei erste Leiterdrähte 5.3, 5.3' und zwei zweite Leiterdrähte 5.3'', 5.3''' auf. Über die zwei ersten Leiterdrähte 5.3, 5.3' wird der elektrische Strom I aus der Umgebung E herangeführt. Über die zwei zweiten Leiterdrähte 5.3'', 5.3‴ wird die elektrische Spannung U in die Umgebung E abgeleitet. Die Leiterdrähte 5.3, 5.3', 5.3", 5.3‴ verlassen über eine figürlich nicht dargestellte elektrische Durchführung des Gehäuses 1 den Innenraum 1.3 des Gehäuses 1.

### DIE ABDECKUNG 6

Der piezoresistive Drucksensor 10 weist mindestens eine Abdeckung 6 auf. Die Abdeckung 6 hat die Funktion, für die Messeinheit 3 einen Bezugsdruck P' zu bilden.

Die Abdeckung 6 ist in der Horizontalebene XY angeordnet. Die Abdeckung 6 ist auf der Oxidschicht 2.3 angeordnet. Vorzugsweise ist die Abdeckung 6 bereichsweise auch auf den Leiterbahnen 5.1, 5.1', 5.1'', 5.1‴ angeordnet. Bei Vorhandensein einer Passivierungsschicht 2.3' auf der Messeinheit 3, den Leiterbahnen 5.1, 5.1', 5.1'', 5.1''' und der Oxidschicht 2.3 ist die Abdeckung 6 bereichsweise auf der Passivierungsschicht 2.3' angeordnet.

Die Abdeckung 6 besteht aus Borosilikatglas oder Silizium. Vorzugsweise ist die Abdeckung 6 von rechteckiger Form und weist Seitenlängen auf. Vorzugsweise weist die Abdeckung 6 entlang der Vertikalachse Z eine Höhe im Bereich 100 bis 800 µm, vorzugsweise von 500 µm auf und in der Horizontalebene XY weist sie eine Seitenlänge von kleiner/gleich 2000 µm, vorzugsweise von kleiner/gleich 1200 µm auf.

Bei Kenntnis der vorliegenden Erfindung kann der Fachmann für die Abdeckung 6 auch ein anderes elektrisch isolierendes Material mit einem elektrischen Widerstand von grösser/gleich 10⁷ Ωm und einem thermischen Ausdehnungskoeffizienten von 2.6 10⁻⁶ K⁻¹ bis über 4.2 10⁻⁶ K⁻¹ im Bereich von 20 °C bis 450 °C verwenden.

Vorzugsweise ist die Abdeckung 6 topfförmig mit einem Hohlraum 6.2, welcher von einem bezüglich der Vertikalachse Z radial beabstandeten Randbereich 6.1 umschlossen ist. Die auf die Oxidschicht 2.3 oder die Passivierungsschicht 2.3' gesetzte Abdeckung 6 ist eingerichtet, die Messeinheit 3 im Hohlraum 6.2 vollständig aufzunehmen. Dazu sind eine Höhe und ein Durchmesser des Hohlraumes 6.2 grösser bemessen, als die Höhe und der Durchmesser der Messeinheit 3. Der Bezugsdruck P' herrscht im Hohlraum 6.2 der Abdeckung 6. Die auf die Oxidschicht 2.3 oder die Passivierungsschicht 2.3' gesetzte Abdeckung 6 ist eingerichtet, den Bezugsdruck P' im Hohlraum 6.2 über eine Zeit konstant zu halten. Dazu ist die auf die Oxidschicht 2.3 oder die Passivierungsschicht 2.3' gesetzte Abdeckung 6 in der Horizontalebene XY über den Randbereich 6.1 in direkter Berührung mit der Oxidschicht 2.3 oder der Passivierungsschicht 2.3'. Vorzugsweise sind die Abdeckung 6 und die Oxidschicht 2.3 oder die Passivierungsschicht 2.3' in dieser Berührungsebene über eine weitere Verbindung 2.7 mechanisch fest miteinander verbunden. Die weitere Verbindung 2.7 kann eine elektrochemische Verbindung wie anodisches Bonden, usw. oder eine chemische Verbindung wie direktes Bonden, usw. sein. Die weitere Verbindung 2.7 ist derart druckdicht, dass der Bezugsdruck P' im Hohlraum während der Zeit der durchschnittlichen Lebensdauer des piezoresistiven Drucksensors 10 von mindestens zehn Jahren konstant bleibt.

Vorzugsweise liegt die Berührungsebene von Abdeckung 6 und Oxidschicht 2.3 oder Passivierungsschicht 2.3' bezüglich der Vertikalachse Z radial innerhalb der Kontaktstellen 5.2, 5.2', 5.2, 5.2‴. Die Kontaktstellen 5.2, 5.2', 5.2'', 5.2‴ liegen somit ausserhalb des Hohlraumes 6.2. Dadurch wird die elektrische Kontaktierung der Leiterdrähte 5.3, 5.3', 5.3", 5.3‴ mit den Kontaktstellen 5.2, 5.2', 5.2'', 5.2‴ durch die Abdeckung 6 nicht behindert.

Vorzugsweise liegt die Berührungsebene von Abdeckung 6 und Oxidschicht 2.3 oder Passivierungsschicht 2.3' bezüglich der Vertikalachse Z radial ausserhalb der Membran 2.5. Dadurch hat die mechanische Verbindung der Abdeckung 6 auf der Oxidschicht 2.3 oder der Passivierungsschicht 2.3' keinen Einfluss auf die Auslenkung der Membran 2.5 unter der Wirkung des Druckes P und die Messung des Druckes P wird durch die Abdeckung 6 nicht beeinflusst.

Der Bezugsdruck P' ist kleiner/gleich 10⁻³ bar. Der Bezugsdruck ist somit um mehr als drei Grössenordnungen kleiner als der zu messende Druck P. Der Bezugsdruck P' dient der Bezugnahme bei der Messung des Druckes P. Durch diese Bezugnahme misst der piezoresistive Drucksensor 10 den Druck absolut.

### DIE STOFFSCHLÜSSIGE VERBINDUNG 4

Der piezoresistive Drucksensor 10 weist mindestens eine stoffschlüssige Verbindung 4 auf. Die stoffschlüssige Verbindung 4 hat die Funktion, das Gehäuse 1 mit dem Grundkörper 2 mechanisch fest und druckdicht zu verbinden.

Die stoffschlüssige Verbindung 4 weist mindestens zwei Werkstoffe M1, M2 auf. Die zwei Werkstoffe M1, M2 umfassen einen ersten Werkstoff M1 und einen zweiten Werkstoff M2.

### DIE LÖTVERBINDUNG

In einer ersten Ausführungsform ist die stoffschlüssige Verbindung 4 eine Lötverbindung mit einem ersten Werkstoff M1, welcher einen höheren Schmelzpunkt als der zweite Werkstoff M2 aufweist. Der erste Werkstoff M1 ist eines der folgenden Metalle: Silber mit einer Schmelztemperatur von 962 °C, Gold mit einer Schmelztemperatur von 1064 °C, Kupfer mit einer Schmelztemperatur von 1085 °C oder Nickel mit einer Schmelztemperatur von 1455 °C. Der zweite Werkstoff M2 ist eines der folgenden Metalle: Indium mit einer Schmelztemperatur von 157 °C oder Zinn mit einer Schmelztemperatur von 232 °C.

Vorzugsweise ist der erste Werkstoff M1 Gold und der zweite Werkstoff M2 ist Indium. Die stoffschlüssige Verbindung 4 aus Gold und Indium weist dann einen Massenanteil des ersten Werkstoffes M1 Gold von grösser/gleich 46 % auf. Durch den Massenanteil des ersten Werkstoffes M1 Gold von grösser/gleich 46 %, weist die stoffschlüssige Verbindung 4 eine Schmelztemperatur TM von grösser/gleich 250 °C, vorzugsweise grösser/gleich 450 °C auf.

Vorzugsweise ist der erste Werkstoff M1 Gold und der zweite Werkstoff M2 ist Zinn. Die stoffschlüssige Verbindung 4 aus Gold und Zinn weist dann einen Massenanteil des ersten Werkstoffes M1 Gold von grösser/gleich 80 %, vorzugsweise grösser/gleich 89 %, vorzugsweise grösser/gleich 93 % auf. Durch den Massenanteil des ersten Werkstoffes M1 Gold von grösser/gleich 80 %, weist die stoffschlüssige Verbindung 4 eine Schmelztemperatur TM von grösser/gleich 250 °C, vorzugsweise grösser/gleich 278 °C auf. Bei einem Massenanteil des ersten Werkstoffes M1 Gold von grösser/gleich 93 %, weist die stoffschlüssige Verbindung 4 eine Schmelztemperatur TM von grösser/gleich 522 °C auf.

In einer zweiten Ausführungsform ist die stoffschlüssige Verbindung 4 eine Lötverbindung mit einem ersten Werkstoff M1, welcher ein elektrischer Leiter ist und einem zweiten Werkstoff M2, welcher ein elektrischer Halbleiter ist. Der erste Werkstoff M1 ist einer der folgenden elektrischen Leiter: Silber mit einer Schmelztemperatur von 962 °C, Gold mit einer Schmelztemperatur von 1064 °C. Der zweite Werkstoff M2 ist einer der folgenden elektrischen Halbleiter: Germanium mit einer Schmelztemperatur von 938 °C oder Silizium mit einer Schmelztemperatur von 1410 °C.

Vorzugsweise ist der erste Werkstoff M1 Gold und der zweite Werkstoff M2 ist Germanium. Die stoffschlüssige Verbindung 4 aus Gold und Germanium weist dann einen Massenanteil des ersten Werkstoffes M1 Gold von grösser/gleich 88 % auf. Durch den Massenanteil des ersten Werkstoffes M1 Gold von grösser/gleich 88 %, weist die stoffschlüssige Verbindung 4 eine Schmelztemperatur TM von grösser/gleich 250 °C, vorzugsweise grösser/gleich 356 °C auf.

Vorzugsweise ist der erste Werkstoff M1 Gold und der zweite Werkstoff M2 ist Silizium. Die stoffschlüssige Verbindung 4 aus Gold und Silizium weist dann einen Massenanteil des ersten Werkstoffes M1 Gold von grösser/gleich 96 % auf. Durch den Massenanteil des ersten Werkstoffes M1 Gold von grösser/gleich 96 %, weist die stoffschlüssige Verbindung 4 eine Schmelztemperatur TM von grösser/gleich 250 °C, vorzugsweise grösser/gleich 363 °C auf.

Für die erste und zweite Ausführungsform der stoffschlüssigen Verbindung 4 als Lötverbindung gilt, dass der hohe Massenanteil des ersten Werkstoffes M1 Gold der stoffschlüssigen Verbindung 4 eine hohe plastische Verformbarkeit verleiht. Gold weist im Vergleich mit dem zweiten Werkstoff M2 Zinn oder Germanium eine deutlich grössere plastische Verformbarkeit auf. Im Vergleich mit Zinn oder Germanium ist Gold unter Zugbelastung deutlich dehnbarer.

Die hohe plastische Verformbarkeit der stoffschlüssigen Verbindung 4 als Lötverbindung ist bedeutsam. Denn bei hohen Dauerbetriebstemperaturen des piezoresistiven Drucksensors 10 im Bereich von 200 °C bis 450 °C treten aufgrund der Differenz der thermischen Ausdehnungskoeffizienten des Gehäuse 1 und der Tragschicht 2.1 mechanische Spannungen auf. Zwar mag diese Differenz der thermischen Ausdehnungskoeffizienten aufgrund der Wahl des Werkstoffes für das Gehäuse 1 und des elektrisch isolierenden Materials für die Tragschicht 2.1 gering sein, so dass auch die Grösse der mechanischen Spannungen gering ist, doch die hohe plastische Verformbarkeit der stoffschlüssigen Verbindung 4 baut diese mechanischen Spannungen aktiv weiter ab. Dabei gleicht die stoffschlüssige Verbindung 4 aufgrund ihrer hohen plastischen Verformbarkeit die unterschiedliche Ausdehnung von Gehäuse 1 und Tragschicht 2.1 aus. Der aktive Abbau der mechanischen Spannungen senkt zum einen die Ausfallwahrscheinlichkeit des piezoresistiven Drucksensors 10 durch Risse oder Bruch in der Tragschicht 2.1 oder in der stoffschlüssigen Verbindung 4. Zum anderen verbessert der aktive Abbau der mechanischen Spannungen die Genauigkeit der Messung des Druckes P, denn die mechanischen Spannungen wirken sich ja auch auf die Messeinheit 3 aus und führen dort zu einer Widerstandsänderung, welche nicht durch den zu messenden Druck P hervorgerufen ist, und somit das Messsignal verfälscht.

Für die erste und zweite Ausführungsform der stoffschlüssigen Verbindung 4 als Lötverbindung gilt, dass der hohe Massenanteil des ersten Werkstoffes M1 Gold der stoffschlüssigen Verbindung 4 eine hohe Korrosionsbeständigkeit verleiht. Dies ermöglicht den Einsatz des piezoresistiven Drucksensors 10 in einem chemisch aggressivem Medium M wie Kraftstoff für Verbrennungskraftmaschinen, ohne dass eine Beeinträchtigung der stoffschlüssigen Verbindung 4 und somit der Verfügbarkeit des piezoresistiven Drucksensors 10 erfolgt.

### DAS GLASLOT

In einer dritten Ausführungsform ist die stoffschlüssige Verbindung 4 ein Glaslot mit einem ersten Werkstoff M1, welcher einen höheren Schmelzpunkt als der zweite Werkstoff M2 aufweist.

Vorzugsweise ist der erste Werkstoff M1 Bismut(III)-oxid mit einer Schmelztemperatur von 817 °C und der zweite Werkstoff M2 Bortrioxid mit einer Schmelztemperatur von 475 °C. Die stoffschlüssige Verbindung 4 aus Bismut(III)-oxid und Bortrioxid weist dann einen Massenanteil des ersten Werkstoffes M1 Bismut(III)-oxid von grösser/gleich 79 % und kleiner/gleich 88 % auf und sie weist einen Massenanteil des zweiten Werkstoffes M2 Bortrioxid von grösser/gleich 5 % und kleiner/gleich 10 % auf. Durch den Massenanteil des ersten Werkstoffes M1 Bismut(III)-oxid von grösser/gleich 79 % und kleiner/gleich 88 % weist die stoffschlüssige Verbindung 4 dann eine Schmelztemperatur TM von grösser/gleich 350 °C auf.

Vorzugsweise ist der erste Werkstoff M1 Blei(II)-oxid mit einer Schmelztemperatur von 888 °C und der zweite Werkstoff M2 Bortrioxid mit einer Schmelztemperatur von 475 °C. Vorzugsweise weist die stoffschlüssige Verbindung 4 dann eine Schmelztemperatur TM von grösser/gleich 350 °C auf.

### DAS VERFAHREN ZUR HERSTELLUNG DES PIEZORESISTIVEN DRUCKSENSORS

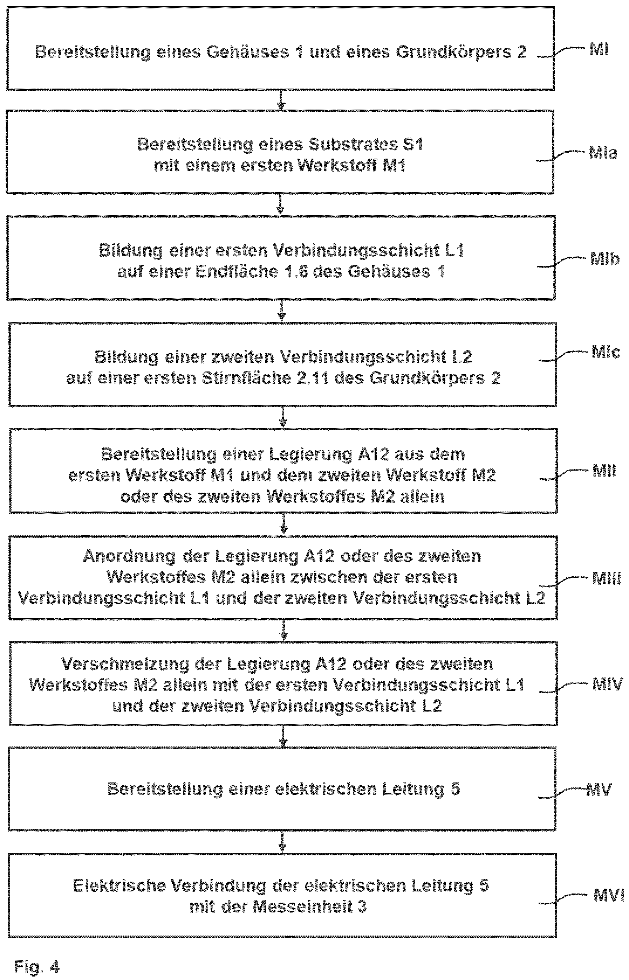

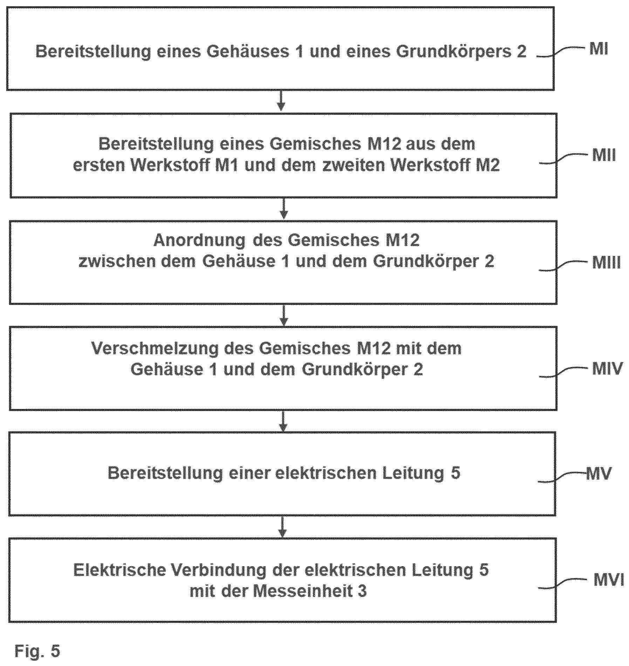

Die Fig. 4 und 5 zeigen Schritte MI bis MVI beim Verfahren zur Herstellung des piezoresistiven Drucksensors 10. Dabei zeigen die Fig. 4 und 5 zwei Verfahrensvarianten. Fig. 4 zeigt eine erste Verfahrensvariante unter Verwendung der stoffschlüssigen Verbindung 4 in der Ausführungsform der Lötverbindung und Fig. 5 zeigt eine zweite Verfahrensvariante unter Verwendung der stoffschlüssigen Verbindung 4 in der Ausführungsform des Glaslotes.

Die Schritte MI bis MVI umfassen einen ersten Schritt MI, weitere erste Schritte MIa bis MIc, sowie weitere Schritte MII bis MVI, welche nachfolgend auch als weiterer zweiter Schritt MII, weiterer dritter Schritt MIII, weiterer vierter Schritt MIV, weiterer fünfter Schritt MV und weiterer sechster Schritt MVI bezeichnet werden.

Bei beiden Verfahrensvarianten gemäss Fig. 4 und 5 findet der erste Schritt MI statt. Im ersten Schritt MI werden das Gehäuse 1 und der Grundkörper 2 bereitgestellt. Der Grundkörper 2 ist aus elektrisch isolierendem Material. Der Grundkörper weist die Tragschicht 2.1 auf.

Nur in der ersten Verfahrensvariante gemäss Fig. 4 wird in einem weiteren ersten Schritt MIa ein Substrat S1 mit dem ersten Werkstoff M1 bereitgestellt.

Nur in der ersten Verfahrensvariante gemäss Fig. 4 wird in noch einem weiteren ersten Schritt MIb der erste Werkstoff M1 aus dem Substrat S1 auf der Endfläche 1.6 des Gehäuses 1 abgeschieden und eine erste Verbindungsschicht L1 gebildet. Die Abscheidung des ersten Werkstoffes M1 auf der Endfläche 1.6 des Gehäuses 1 erfolgt mittels chemischer Gasphasenabscheidung, physikalischer Gasphasenabscheidung, Galvanik, usw. Entlang der Vertikalachse Z weist die erste Verbindungschicht L1 eine Dicke von kleiner/gleich 20 µm, vorzugsweise kleiner/gleich 10 µm auf.

Ebenfalls nur in der ersten Verfahrensvariante gemäss Fig. 4 wird in einem zusätzlichen weiteren ersten Schritt MIc der erste Werkstoff M1 aus dem Substrat S1 auf der ersten Tragstirnfläche 2.11 abgeschieden und eine zweite Verbindungsschicht L2 gebildet. Die Abscheidung des ersten Werkstoffes M1 auf der ersten Tragstirnfläche 2.11 erfolgt mittels chemischer Gasphasenabscheidung, physikalischer Gasphasenabscheidung, Galvanik, usw. Entlang der Vertikalachse Z weist die zweite Verbindungschicht L2 eine Dicke von kleiner/gleich 20 µm, vorzugsweise kleiner/gleich 10 µm auf.

Bei beiden Verfahrensvarianten gemäss Fig. 4 und 5 findet der weitere zweite Schritt MII statt.

In der ersten Verfahrensvariante gemäss Fig. 4 wird im weiteren zweiten Schritt MII eine Legierung A12 aus dem ersten Werkstoff M1 und dem zweiten Werkstoff M2 bereitgestellt oder es wird der zweite Werkstoff M2 allein bereitgestellt. Die Legierung A12 ist ein makroskopisch homogener metallischer Werkstoff.

In der zweiten Verfahrensvariante gemäss Fig. 5 wird im weiteren zweiten Schritt MII ein Gemisch M12 aus dem ersten Werkstoff M1 und dem zweiten Werkstoff M2 bereitgestellt.

Die Bereitstellung der Legierung A12 oder des zweiten Werkstoffes M2 allein oder des Gemisches M12 kann auf vielfältige Weise erfolgen. So kann die Legierung A12 oder der zweite Werkstoff M2 allein oder das Gemisch M12 als Pulver, als Vollteil oder als Formteil bereitgestellt werden.

Bei beiden Verfahrensvarianten gemäss Fig. 4 und 5 findet der weitere dritte Schritt MIII statt.

In der ersten Verfahrensvariante gemäss Fig. 4 wird im weiteren dritten Schritt MIII die Legierung A12 oder der zweite Werkstoff M2 allein zwischen der ersten Verbindungsschicht L1 und der zweiten Verbindungsschicht L2 angeordnet. Die Anordnung der Legierung A12 oder des zweiten Werkstoffes M2 allein zwischen der ersten Verbindungsschicht L1 und der zweiten Verbindungsschicht L2 kann durch Abscheidung des Pulvers oder des Vollteils mittels chemischer Gasphasenabscheidung, physikalischer Gasphasenabscheidung, Galvanik, usw. erfolgen oder sie kann durch Positionierung des Formteils zwischen der ersten Verbindungsschicht L1 und der zweiten Verbindungsschicht L2 erfolgen.

In der zweiten Verfahrensvariante gemäss Fig. 5 wird im weiteren dritten Schritt MIII das Gemisch M12 zwischen dem Gehäuse 1 und dem Grundkörper 2 angeordnet. Die Anordnung des Gemisches M12 zwischen dem Gehäuse 1 und dem Grundkörper 2 kann durch Abscheidung des Pulvers oder des Vollteils mittels chemischer Gasphasenabscheidung, physikalischer Gasphasenabscheidung, Dispensieren, Siebdruck, Galvanik, usw. erfolgen oder sie kann durch Positionierung des Formteils zwischen dem Gehäuse 1 und dem Grundkörper 2 erfolgen.

Entlang der Vertikalachse Z weist die Legierung A12 oder der zweite Werkstoff M2 allein oder das Gemisch M12 eine Dicke von kleiner/gleich 100 µm, vorzugsweise kleiner/gleich 50 µm, vorzugsweise kleiner/gleich 13 µm auf.

Bei beiden Verfahrensvarianten gemäss Fig. 4 und 5 findet der weitere vierte Schritt MIV statt.

In der ersten Verfahrensvariante gemäss Fig. 4 wird im weiteren vierten Schritt MIV die zwischen der ersten Verbindungsschicht L1 und der zweiten Verbindungsschicht L2 angeordnete Legierung A12 oder der zweite Werkstoff M2 allein mit der ersten Verbindungsschicht L1 und der zweiten Verbindungsschicht L2 verschmolzen. Die Schmelztemperatur der Legierung A12 oder des zweiten Werkstoffes M2 allein ist tiefer als die Schmelztemperatur TM der stoffschlüssigen Verbindung 4. Bei der Verschmelzung diffundiert der erste Werkstoff M1 aus den beiden Verbindungsschichten L1, L2 in die Legierung A12 oder in den zweiten Werkstoff M2, während der zweite Werkstoff M2 in die beiden Verbindungsschichten L1, L2 diffundiert. Durch die Verschmelzung der Legierung A12 oder des zweiten Werkstoffes M2 allein mit der ersten Verbindungsschicht L1 und der zweiten Verbindungsschicht L2 wird die stoffschlüssige Verbindung 4 in der Ausführungsform der Lötverbindung gebildet.

In der Legierung A12 oder im zweiten Werkstoff M2 allein ist der Massenanteil des ersten Werkstoffes M1 kleiner als in der resultierenden stoffschlüssigen Verbindung 4. Durch den höheren Massenanteil des ersten Werkstoffes M1 ist die Schmelztemperatur TM der stoffschlüssigen Verbindung 4 höher als die Schmelztemperatur der Legierung A12 oder des zweiten Werkstoffes M2. Dadurch ist die Temperaturbelastung der auf dem Grundkörper 2 angeordneten Messeinheit 3 bei der Verschmelzung deutlich geringer als bei anderen äquivalenten Verfahren, womit die Messeigenschaften des piezoresistiven Drucksensors 10 verbessert und die Ausfallwahrscheinlichkeit der Messeinheit 3 bei der Herstellung reduziert werden.

In der zweiten Verfahrensvariante gemäss Fig. 5 wird im weiteren vierten Schritt MIV das zwischen dem Gehäuse 1 und dem Grundkörper 2 angeordnete Gemisch M12 mit dem Gehäuse 1 und dem Grundkörper 2 verschmolzen. Bei der Verschmelzung des Gemisches M12 mit dem Gehäuse 1 und dem Grundkörper 2 findet keine Diffusion der Werkstoffe M1, M2 statt. Durch die Verschmelzung des Gemisches M12 mit dem Gehäuse 1 und dem Grundkörper 2 wird die stoffschlüssigen Verbindung 4 in der Ausführung des Glaslotes gebildet.

Bei beiden Verfahrensvarianten gemäss Fig. 4 und 5 wird im weiteren fünften Schritt MV die elektrische Leitung 5 bereitgestellt.

Bei beiden Verfahrensvarianten gemäss Fig. 4 und 5 wird im weiteren sechsten Schritt MVI die elektrische Leitung 5 mit der Messeinheit 3 elektrisch verbunden, welche elektrische Leitung 5 die Widerstandsänderung ΔR als elektrische Spannung U abgreift und in die Umgebung E ableitet.

### Bezugszeichenliste

- 10: piezoresistiver Drucksensor
- 1: Gehäuse
- 1.0 - 1.0": Gehäusekörper
- 1.1: Stirnfläche
- 1.2: Mantelfläche
- 1.3: Innenraum
- 1.4: Öffnung
- 1.5: Montagemittel
- 1.6: Endfläche
- 1.7: stoffschlüssige Verbindung
- 2: Grundkörper
- 2.1: Tragschicht
- 2.11: erste Tragstirnfläche
- 2.12: zweite Tragstirnfläche
- 2.13: Durchgangsloch
- 2.2: Ausformschicht
- 2.21: erste Ausformstirnfläche
- 2.22: zweite Ausformstirnfläche
- 2.23: wannenförmige Vertiefung
- 2.3: Oxidschicht
- 2.3': Passivierungsschicht
- 2.4: Sackloch
- 2.5: Membran
- 2.6: Verbindung
- 2.7: weitere Verbindung
- 3: Messeinheit
- 4: stoffschlüssige Verbindung
- 5: elektrische Leitung
- 5.1 - 5.1‴: Leiterbahn
- 5.2 - 5.2‴: Kontaktstelle
- 5.3, 5.3': Leiterdraht
- 6: Abdeckung
- 6.1: Randbereich
- 6.2: Hohlraum
- A - A: Schnittverlauf
- A12: Legierung
- E: Umgebung
- I: elektrischer Strom
- L1, L2: Verbindungsschicht
- M: Medium
- M1, M2: Werkstoff
- M12: Gemisch
- MI - MVI: Schritte des Verfahrens
- P: Druck
- P': Bezugsdruck
- ΔR: Widerstandsänderung
- S1: Substrat
- TM: Schmelztemperatur
- U: elektrische Spannung
- X: Horizontalachse
- XY: Horizontalebene
- Y: Längsachse
- Z: Vertikalachse

## Patentansprüche

1. Piezoresistiver Drucksensor (10) zur Messung des Druckes (P) eines Mediums (M) in einer Umgebung (E); mit mindestens einem Gehäuse (1), mindestens einem Grundkörper (2) und mindestens einer Messeinheit (3); welches Gehäuse (1) einen Innenraum (1.3) und eine Öffnung (1.4) aufweist; welcher Grundkörper (2) und welche Messeinheit (3) im Innenraum (1.3) angeordnet sind; in welchem Grundkörper (2) ein Sackloch (2.4) und eine Membran (2.5) ausgebildet sind, welche Membran (2.5) das Sackloch (2.4) einseitig begrenzt; welcher Grundkörper (2) derart im Innenraum (1.3) angeordnet ist, dass das Sackloch (2.4) mit der Öffnung (1.4) kommuniziert; welcher piezoresistive Drucksensor (10) eingerichtet ist, wenn er dem Medium (M) ausgesetzt ist, ein Eindringen des Mediums (M) durch die Öffnung (1.4) und das Sackloch (2.4) bis zur Membran (2.5) zu ermöglichen, welcher Druck (P) des bis zur Membran (2.5) eingedrungenen Mediums (M) die Membran (2.5) auslenkt; welche Messeinheit (3) auf einer vom Sackloch (2.4) abgewandten Seite der Membran (2.5) angeordnet ist und für die Auslenkung der Membran (2.5) eine Widerstandsänderung (ΔR) erzeugt, welche Widerstandsänderung (ΔR) proportional zum zu messenden Druck (P) ist; **dadurch gekennzeichnet, dass** der piezoresistive Drucksensor (10) mindestens eine stoffschlüssige Verbindung (4) aufweist, welche stoffschlüssige Verbindung (4) den Grundkörper (2) direkt mit dem Gehäuse (1) mechanisch fest verbindet; und dass die stoffschlüssige Verbindung (4) eine Schmelztemperatur (TM) von grösser/gleich 250 °C aufweist.

2. Piezoresistiver Drucksensor (10) nach Anspruch 1, **dadurch gekennzeichnet, dass** der piezoresistive Drucksensor (10) mindestens eine elektrische Leitung (5) aufweist, welche elektrische Leitung (5) die Widerstandsänderung (ΔR) als elektrische Spannung (U) abgreift und in die Umgebung (E) ableitet.

3. Piezoresistiver Drucksensor (10) nach einem der Ansprüche 1 oder 2, **dadurch gekennzeichnet, dass** die stoffschlüssige Verbindung (4) eine Lötverbindung aus mindestens zwei Werkstoffen (M1, M2) ist, welche Werkstoffe (M1, M2) einen ersten Werkstoff (M1) und einen zweiten Werkstoff (M2) umfassen; dass der erste Werkstoff (M1) einen höheren Schmelzpunkt als der zweite Werkstoff (M2) aufweist; dass der erste Werkstoff (M1) eines der folgenden Metalle ist: Silber, Gold, Kupfer oder Nickel; und dass der zweite Werkstoff (M2) eines der folgenden Metalle ist: Indium oder Zinn.

4. Piezoresistiver Drucksensor (10) nach Anspruch 3, **dadurch gekennzeichnet, dass** der erste Werkstoff (M1) Gold ist; dass der zweite Werkstoff (M2) Indium ist; dass der Masseanteil des ersten Werkstoffes (M1) Gold grösser/gleich 46 % ist; und dass die stoffschlüssige Verbindung (4) eine Schmelztemperatur (TM) von grösser/gleich 450 °C aufweist.

5. Piezoresistiver Drucksensor (10) nach Anspruch 3, **dadurch gekennzeichnet, dass** der erste Werkstoff (M1) Gold ist; dass der zweite Werkstoff (M2) Zinn ist; dass der Masseanteil des ersten Werkstoffes (M1) Gold grösser/gleich 80 % ist; und dass die stoffschlüssige Verbindung (4) eine Schmelztemperatur (TM) von grösser/gleich 278 °C aufweist.

6. Piezoresistiver Drucksensor (10) nach Anspruch 3, **dadurch gekennzeichnet, dass** der erste Werkstoff (M1) Gold ist; dass der zweite Werkstoff (M2) Zinn ist; dass der Masseanteil des ersten Werkstoffes (M1) Gold grösser/gleich 93 % ist; und dass die stoffschlüssige Verbindung (4) eine Schmelztemperatur (TM) von grösser/gleich 522 °C aufweist.

7. Piezoresistiver Drucksensor (10) nach einem der Ansprüche 1 oder 2, **dadurch gekennzeichnet, dass** die stoffschlüssige Verbindung (4) eine Lötverbindung aus mindestens zwei Werkstoffen (M1, M2) ist, welche Werkstoffe (M1, M2) einen ersten Werkstoff (M1) und einen zweiten Werkstoff (M2) umfassen; dass der erste Werkstoff (M1) ein elektrischer Leiter ist und dass der zweite Werkstoff (M2) ein elektrischer Halbleiter ist; dass der erste Werkstoff (M1) eines der folgenden Metalle ist: Silber oder Gold; und dass der zweite Werkstoff (M2) einer der folgenden Halbleiter ist: Germanium oder Silizium.

8. Piezoresistiver Drucksensor (10) nach Anspruch 7, **dadurch gekennzeichnet, dass** der erste Werkstoff (M1) Gold ist; dass der zweite Werkstoff (M2) Germanium ist; dass der Masseanteil des ersten Werkstoffes (M1) Gold grösser/gleich 88 % ist; und dass die stoffschlüssige Verbindung (4) eine Schmelztemperatur (TM) von grösser/gleich 356 °C aufweist.

9. Piezoresistiver Drucksensor (10) nach Anspruch 7, **dadurch gekennzeichnet, dass** der erste Werkstoff (M1) Gold ist; dass der zweite Werkstoff (M2) Silizium ist; dass der Masseanteil des ersten Werkstoffes (M1) Gold grösser/gleich 96 % ist; und dass die stoffschlüssige Verbindung (4) eine Schmelztemperatur (TM) von grösser/gleich 363 °C aufweist.

10. Piezoresistiver Drucksensor (10) nach einem der Ansprüche 1 oder 2, **dadurch gekennzeichnet, dass** die stoffschlüssige Verbindung (4) ein Glaslot aus mindestens zwei Werkstoffen (M1, M2) ist, welche Werkstoffe (M1, M2) einen ersten Werkstoff (M1) und einen zweiten Werkstoff (M2) umfassen; dass der erste Werkstoff (M1) einen höheren Schmelzpunkt als der zweite Werkstoff (M2) aufweist; dass der erste Werkstoff (M1) Bismut(III)-oxid oder Blei(II)-oxid ist und der zweite Werkstoff (M2) Bortrioxid ist; und dass die stoffschlüssige Verbindung (4) eine Schmelztemperatur (TM) von grösser/gleich 350 °C aufweist.

11. Piezoresistiver Drucksensor (10) nach einem der Ansprüche 1 bis 10, **dadurch gekennzeichnet, dass** das Gehäuse (1) zum Innenraum (1.3) hin im Bereich der Öffnung (1.4) eine Endfläche (1.6) ausbildet; dass der Grundkörper (2) eine Tragschicht (2.1) aufweist, in welcher Tragschicht (2.1) das Sackloch (2.5) als Durchgangsloch (2.13) ausgebildet ist; dass die Tragschicht (2.1) im Bereich des Durchgangsloches (2.13) eine erste Tragstirnfläche (2.11) aufweist; und dass der Grundkörper (2) derart im Innenraum (1.3) angeordnet ist, dass die erste Tragstirnfläche (2.11) über die stoffschlüssige Verbindung (4) mit der Endfläche (1.6) mechanisch fest verbunden ist und die Öffnung (1.4) entlang einer Vertikalachse (Z) mit dem Durchgangsloch (2.13) kommuniziert.

12. Piezoresistiver Drucksensor (10) nach Anspruch 11, **dadurch gekennzeichnet, dass** der Grundkörper (2) eine Ausformschicht (2.2) aufweist, in welcher Ausformschicht (2.2) das Sackloch (2.5) als wannenförmige Vertiefung (2.23) ausgebildet ist; dass die Ausformschicht (2.2) eine erste Ausformstirnfläche (2.21) und eine zweite Ausformstirnfläche (2.22) aufweist; und dass ein Bereich der Ausformschicht (2.2) entlang der Vertikalachse (Z) zwischen der wannenförmigen Vertiefung (2.23) und der zweiten Ausformstirnfläche (2.22) die Membran (2.5) bildet.

13. Piezoresistiver Drucksensor (10) nach Anspruch 12, **dadurch gekennzeichnet, dass** die zweite Tragstirnfläche (2.12) und die erste Ausformstirnfläche (2.21) in direkter Berührung sind und eine Berührungsebene bilden, in welcher Berührungsebene die Tragschicht (2.1) und die Ausformschicht (2.2) über eine Verbindung (2.6) mechanisch fest miteinander verbunden sind.

14. Piezoresistiver Drucksensor (10) nach einem der Ansprüche 11 oder 12, **dadurch gekennzeichnet, dass** der Grundkörper (2) eine Oxidschicht (2.3) aufweist, welche Oxidschicht (2.3) auf der zweiten Ausformstirnfläche (2.22) angeordnet ist; und dass die Messeinheit (3) auf der Oxidschicht (2.3) angeordnet ist, welche Messeinheit (3) eine Mehrzahl von Widerstandselementen aus piezoresistivem Material aufweist.

15. Piezoresistiver Drucksensor (10) nach Anspruch 14, **dadurch gekennzeichnet, dass** der piezoresistive Drucksensor (10) mindestens eine Abdeckung (6) aufweist, welche Abdeckung (6) topfförmig ist und einen von einem Randbereich (6.1) umschlossenen Hohlraum (6.2) aufweist; und dass die mit dem Randbereich (6.1) auf die Oxidschicht (2.3) gesetzte Abdeckung (6) eingerichtet ist, die Messeinheit (3) im Hohlraum (6.2) vollständig aufzunehmen und im Hohlraum (6.2) einen Bezugsdruck (P') über eine Zeit konstant zu halten, wodurch der piezoresistive Drucksensor (10) den Druck (P) durch Bezugnahme auf den Bezugsdruck (P') absolut misst; oder dass falls auf der Oxidschicht (2.3) eine Passivierungsschicht (2.3') aufgebracht ist, die mit dem Randbereich (6.1) auf die Passivierungsschicht (2.3') gesetzte Abdeckung (6) eingerichtet ist, die Messeinheit (3) im Hohlraum (6.2) vollständig aufzunehmen und im Hohlraum (6.2) einen Bezugsdruck (P') über eine Zeit konstant zu halten, wodurch der piezoresistive Drucksensor (10) den Druck (P) durch Bezugnahme auf den Bezugsdruck (P') absolut misst.

16. Piezoresistiver Drucksensor (10) nach einem der Ansprüche 11 bis 15, **dadurch gekennzeichnet, dass** das Gehäuse (1) einteilig mit einem Gehäusekörper (1.0) ist oder dass das Gehäuse (1) mehrteilig mit einem ersten Gehäusekörper (1.0') und mindestens einem zweiten Gehäusekörper (1.0'') ist; dass die Tragschicht (2.1) über die stoffschlüssige Verbindung (4) mit dem Gehäusekörper (1.0) oder mit dem zweiten Gehäusekörper (1.0'') mechanisch fest verbunden ist; dass der Gehäusekörper (1.0) oder der zweite Gehäusekörper (1.0'') aus einem mechanisch beständigem Material ist, welches mechanisch beständige Material im Bereich von 20 °C bis 450 °C einen thermischen Ausdehnungskoeffizienten von kleiner/gleich 7.0 10⁻⁶ K⁻¹ aufweist; dass die Tragschicht **(2.1)** aus einem elektrisch isolierenden Material ist, welches elektrisch isolierende Material im Bereich von 20 °C bis 450 °C einen thermischen Ausdehnungskoeffizienten von kleiner/gleich 4.5 10⁻⁶ K⁻¹ aufweist; und dass in der stoffschlüssigen Verbindung (4) im Bereich von 20 °C bis 450 °C eine Differenz der thermischen Ausdehnungskoeffizienten des Gehäusekörpers (1.0) oder des zweite Gehäusekörpers (1.0'') und der Tragschicht (2.1) von kleiner/gleich 3.0 10⁻⁶ K⁻¹ vorzugsweise kleiner/gleich 2.0 10⁻⁶ K⁻¹ resultiert.

17. Verfahren zur Herstellung eines piezoresistiven Drucksensors (10) zur Messung des Druckes (P) eines Mediums (M) in einer Umgebung (E); mit mindestens einem Gehäuse (1), mindestens einem Grundkörper (2) und mindestens einer Messeinheit (3); welches Gehäuse (1) einen Innenraum (1.3) und eine Öffnung (1.4) aufweist; welcher Grundkörper (2) und welche Messeinheit (3) im Innenraum (1.3) angeordnet sind; in welchem Grundkörper (2) ein Sackloch (2.4) und eine Membran (2.5) ausgebildet sind, welche Membran (2.5) das Sackloch (2.4) einseitig begrenzt; welcher Grundkörper (2) derart im Innenraum (1.3) angeordnet ist, dass das Sackloch (2.4) mit der Öffnung (1.4) kommuniziert; welcher piezoresistive Drucksensor (10) eingerichtet ist, wenn er dem Medium (M) ausgesetzt ist, ein Eindringen des Mediums (M) durch die Öffnung (1.4) und das Sackloch (2.4) bis zur Membran (2.5) zu ermöglichen, welcher Druck (P) des bis zur Membran (2.5) eingedrungenen Mediums (M) die Membran (2.5) auslenkt; welche Messeinheit (3) auf einer vom Sackloch (2.4) abgewandten Seite der Membran (2.5) angeordnet ist und für die Auslenkung der Membran (2.5) eine Widerstandsänderung (ΔR) erzeugt, welche Widerstandsänderung (ΔR) proportional zum zu messenden Druck (P) ist; **dadurch gekennzeichnet, dass** in einem ersten Schritt (MI) des Verfahrens das Gehäuse (1) und der Grundkörper (2) bereitgestellt werden; und dass in weiteren Schritten (MIa bis MIV) des Verfahrens der Grundkörper (2) über mindestens eine stoffschlüssige Verbindung (4) direkt mit dem Gehäuse (1) mechanisch fest verbunden wird, welche stoffschlüssige Verbindung (4) eine Schmelztemperatur (TM) von grösser/gleich 250 °C aufweist.

18. Verfahren nach Anspruch 17, **dadurch gekennzeichnet, dass** in einem weiteren fünften Schritt (MV) des Verfahrens mindestens eine elektrische Leitung (5) bereitgestellt wird; und dass in einem weiteren sechsten Schritt (MVI) des Verfahrens die elektrische Leitung (5) mit der Messeinheit (3) elektrisch verbunden wird, welche elektrische Leitung (5) die Widerstandsänderung (ΔR) als elektrische Spannung (U) abgreift und in die Umgebung (E) ableitet.

19. Verfahren nach einem der Ansprüche 17 oder 18, **dadurch gekennzeichnet, dass** in einem weiteren ersten Schritt (MIa) des Verfahrens ein Substrat (S1) mit einem ersten Werkstoff (M1) bereitgestellt wird; dass das Gehäuse (1) zum Innenraum (1.3) hin im Bereich der Öffnung (1.4) eine Endfläche (1.6) ausbildet; dass in noch einem weiteren ersten Schritt (MIb) des Verfahrens der erste Werkstoff (M1) aus dem Substrat (S1) auf der Endfläche (1.6) abgeschieden und eine erste Verbindungsschicht (L1) gebildet wird, welche erste Verbindungsschicht (L1) eine Dicke von kleiner/gleich 20 µm, vorzugsweise kleiner/gleich 10 µm aufweist.

20. Verfahren nach Anspruch 19, **dadurch gekennzeichnet, dass** der Grundkörper (2) eine Tragschicht (2.1) aufweist, in welcher Tragschicht (2.1) das Sackloch (2.5) als Durchgangsloch (2.13) ausgebildet ist; dass die Tragschicht (2.1) im Bereich des Durchgangsloches (2.13) eine erste Tragstirnfläche (2.11) aufweist; dass in einem zusätzlichen weiteren ersten Schritt (MIc) des Verfahrens der erste Werkstoff (M1) aus dem Substrat (S1) auf der ersten Tragstirnfläche (2.11) abgeschieden und eine zweite Verbindungsschicht (L2) gebildet wird, welche zweite Verbindungsschicht (L2) eine Dicke von kleiner/gleich 20 µm, vorzugsweise kleiner/gleich 10 µm aufweist.

21. Verfahren nach Anspruch 20, **dadurch gekennzeichnet, dass** in einem weiteren zweiten Schritt (MII) des Verfahrens eine Legierung (A12) aus dem ersten Werkstoff (M1) und einem zweiten Werkstoff (M2) oder der zweite Werkstoff (M2) allein bereitgestellt wird, welche Legierung (A12) oder welcher zweiter Werkstoff (M2) allein eine Dicke von kleiner/gleich 100 µm, vorzugsweise kleiner/gleich 50 µm, vorzugsweise kleiner/gleich 13 µm aufweist; dass in einem weiteren dritten Schritt (MIII) des Verfahrens die Legierung (A12) oder der zweite Werkstoff (M2) allein zwischen der ersten Verbindungsschicht (L1) und der zweiten Verbindungsschicht (L2) angeordnet wird; und dass in einem weiteren vierten Schritt (MIV) des Verfahrens die zwischen der ersten Verbindungsschicht (L1) und der zweiten Verbindungsschicht (L2) angeordnete Legierung (A12) oder der zweite Werkstoff (M2) allein mit der ersten Verbindungsschicht (L1) und der zweiten Verbindungsschicht (L2) verschmolzen wird.

22. Verfahren nach Anspruch 21, **dadurch gekennzeichnet, dass** durch die Verschmelzung der Legierung (A12) oder des zweiten Werkstoffes (M2) allein mit der ersten Verbindungsschicht (L1) und der zweiten Verbindungsschicht (L2) die stoffschlüssige Verbindung (4) gebildet wird, welche stoffschlüssige Verbindung (4) eine Lötverbindung mit einer Schmelztemperatur (TM) grösser als die Schmelztemperatur der Legierung (A12) oder des zweiten Werkstoffes (M2) allein ist.

23. Verfahren nach einem der Ansprüche 17 oder 18, **dadurch gekennzeichnet, dass** in einem weiteren zweiten Schritt (MII) des Verfahrens ein Gemisch (M12) aus dem ersten Werkstoff (M1) und einem zweiten Werkstoff (M2) bereitgestellt wird, welches Gemisch (M12) eine Dicke von kleiner/gleich 100 µm, vorzugsweise kleiner/gleich 50 µm, vorzugsweise kleiner/gleich 13 µm aufweist; dass in einem weiteren dritten Schritt (MIII) des Verfahrens das Gemisch (M12) zwischen dem Gehäuse (1) und dem Grundkörper (2) angeordnet wird; dass in einem weiteren vierten Schritt (MIV) des Verfahrens das zwischen dem Gehäuse (1) und dem Grundkörper (2) angeordnete Gemisch (M12) mit dem Gehäuse (1) und dem Grundkörper (2) verschmolzen wird; und dass durch die Verschmelzung des Gemisches (M12) mit dem Gehäuse (1) und dem Grundkörper (2) die stoffschlüssige Verbindung (4) gebildet wird, welche stoffschlüssige Verbindung (4) ein Glaslot ist.
